# EUROPEAN PATENT SPECIFICATION

(11) **EP 3 952 432 B1**
(45) Date of publication and mention of the grant of the patent: **06.11.2024**
(21) Application number: 19921038.6
(22) Date of filing: 28.03.2019
(51) Int. Cl.: H04L 69/24, H04W 28/06, H04W 48/18, H04W 72/04, H04W 92/20, H04L 69/04

(54) **RADIO BASE STATION, RADIO COMMUNICATION SYSTEM AND METHOD**
FUNKBASISSTATION, FUNKKOMMUNIKATIONSSYSTEM UND -VERFAHREN
STATION DE BASE RADIO, SYSTÈME ET MÉTHODE DE COMMUNICATION RADIO

(43) Date of publication of application: 09.02.2022
(73) Proprietor: NTT DOCOMO, INC., Chiyoda-Ku Tokyo 100-6150 (JP)
(72) Inventor: UCHINO Tooru, Tokyo 100-6150 (JP); TAKAHASHI Hideaki, Tokyo 100-6150 (JP); KAI Kenji, Tokyo 100-6150 (JP)
(74) Representative: Hoffmann Eitle
(86) International application number: PCT/JP2019/013837
(87) International publication number: WO 2020/194731

(56) References cited:
- WO-A1-2018/031573
- JP-A- 2016 532 373
- US-A1- 2015 043 479
- "Advances in Computing and Information Technology : Proceedings of the Second International Conference on Advances in Computing and Information Technology (ACITY) July 13-15, 2012, Chennai, India - Volume 1", vol. 176, 1 January 2012, SPRINGER BERLIN HEIDELBERG, Berlin, Heidelberg, ISBN: 978-3-642-31513-8, ISSN: 2194-5357, article SREENIVAS BANDA ET AL: "Effective Resource Allocation Technique for Wireless Cellular System : Proceedings of the Second International Conference on Advances in Computing and Information Technology (ACITY) July 13-15, 2012, Chennai, India - Volume 1", pages: 633 - 640, XP093047918, DOI: 10.1007/978-3-642-31513-8_64
- CATT: "UE capability coordination", 3GPP TSG-RAN WG2# 85 R2-140176, 10 February 2014 (2014-02-10), XP050737406
- NSN; NOKIA CORPORATION: "MeNB-initiated procedures for dual connectivity", 3GPP TSG-RAN WG2#86 R2-142307, 19 May 2014 (2014-05-19), XP050790215

## Description

### Technical Field

The present invention relates to a radio base station, a radio communication system and a method.

### Background Art

The 3rd Generation Partnership Project (3GPP) specifies Long Term Evolution (LTE) and specifies LTE-Advanced (hereinafter referred to as LTE including LTE-Advanced) for the purpose of speeding up LTE. In addition, in the 3GPP, specifications for a successor system of LTE, called 5G New Radio (NR) or Next Generation (NG) or the like, are also being studied.

As in the LTE, the NR adopts RObust Header Compression (ROHC, RFC3095) that compresses headers (IP/UDP/RTP headers) by utilizing the fact that headers in the same packet stream change (or do not change) in a specific pattern.

A memory area that can be used for header compression/decompression processing in accordance with ROHC differs depending on the implementation of a user equipment (UE) and a network (radio base station, etc.). The UE notifies the network of a maximum number of header compression sessions (also referred to as ROHC sessions), which can be configured at the same time, as UE capability. Specifically, the UE notifies the network of maxNumberROHC-ContextSessions (see Non Patent Literature 1).

The UE and the network configure a maximum value called maxCID so that the number of memory areas used for header compression/decompression processing does not exceed the UE capability and network capability (see Non Patent Literature 2).

In addition, the 3GPP defines dual connectivity (Multi-Radio Dual Connectivity (MR-DC)) in which a UE simultaneously connects to a plurality of nodes (radio base stations) using different radio access technologies (RATs), specifically, a master node (MN) and a secondary node (SN) (see Non Patent Literature 3).

### Citation List

### Non Patent Literature

Non Patent Literature 1: 3GPP TS 38.306 V15.4.0, 3rd Generation Partnership Project; Technical Specification Group Radio Access Network; NR; User Equipment (UE) radio access capabilities (Release 15), 3GPP, December 2018
Non Patent Literature 2: 3GPP TS 38.331 V15.4.0, 3rd Generation Partnership Project; Technical Specification Group Radio Access Network; NR; Radio Resource Control (RRC) protocol specification (Release 15), 3GPP, December 2018
Non Patent Literature 3: 3GPP TS 37.340 V15.4.0, 3rd Generation Partnership Project; Technical Specification Group Radio Access Network; Evolved Universal Terrestrial Radio Access (E-UTRA) and NR; Multi-connectivity; Stage 2 (Release 15), 3GPP, December 2018.
US 2015/0043479 A1 describes allocating UE processing capability among multiple access nodes. When the UE is in communication with at least a first access node and a second access node, a first allocation of the UE processing capability for the first access node or a second allocation of the UE processing capability for the second access node may be determined. Resources may be assigned for the UE based at least in part on the first allocation or the second allocation. The first access node and the second access node may negotiate to determine the first allocation or the second allocation. The first allocation or the second allocation may be determined based on a previously-configured rule associated with a category of the UE.

### Summary of Invention

In the case of the MR-DC, the MN and the SN (radio base stations) independently determine configuration contents necessary for communication with the UE, without recognizing the configuration state of the other node. Therefore, if the MN and the SN each independently configure a header compression session, specifically, an ROHC session, based on maxCID, the entire UE may be required to configure more ROHC sessions than maxNumberROHC-ContextSessions.

However, since the request for configuring such ROHC sessions exceeds the UE capability, the UE cannot configure the ROHC sessions.

Therefore, the present invention has been made in view of such a circumstance, and an object of the present invention is to provide a radio base station, a radio communication system and a method that can configure a header compression session more reliably even if predetermined dual connectivity (MR-DC) is performed.

According to one aspect of the present invention, there is provided a radio base station as set out in Claim 1.

According to one aspect of the present invention, there is provided a radio communication system as set out in Claim 5.

According to one aspect of the present invention, there is provided a method as set out in Claim 6.

### Brief Description of Drawings

Fig. 1 is an overall schematic configuration diagram of a radio communication system 10.
Fig. 2 is a functional block configuration diagram of an eNB 100A.
Fig. 3 is a functional block configuration diagram of a UE 200.
Fig. 4A is a diagram illustrating an example of determining the allocation number (maxCID) of ROHC sessions according to the related art.
Fig. 4B is a diagram illustrating an example of determining the allocation number (maxCID) of ROHC sessions according to the present embodiment.
Fig. 5 is a diagram illustrating an operation flow (No. 1) of determining the allocation number of ROHC sessions by the eNB 100A.
Fig. 6 is a diagram illustrating an operation flow (No. 2) of determining the allocation number of ROHC sessions by the eNB 100A.
Fig. 7 is a diagram illustrating an operation flow of determining the allocation number of ROHC sessions by the UE 200.
Fig. 8 is a diagram illustrating an operation flow if the UE 200 receives a configuration request for ROHC sessions beyond capability.
Fig. 9 is a diagram illustrating an example of a hardware configuration of the eNB 100A, a gNB 100B, and the UE 200.

### Detailed Description

A radio base station (eNB 100A) described herein includes: a control unit (control unit 130) that determines an allocation number (maxCID) of header compression sessions capable of being configured by each of a radio base station and another radio base station (gNB 100B) on which a user equipment (UE 200) performs dual connectivity, based on a maximum number (maxNumberROHC-ContextSessions) of header compression sessions capable of being configured by the user equipment; and a transmitting unit (transmitting unit 110) that transmits allocation information indicating the allocation number to the other radio base station.

A user equipment (UE 200) described herein includes: a control unit (control unit 230) that determines an allocation number (maxCID) of header compression sessions capable of being configured with each of a radio base station (eNB 100A) and another radio base station (gNB 100B) on which the user equipment performs dual connectivity, based on a maximum number (maxNumberROHC-ContextSessions) of header compression sessions capable of being configured by the user equipment; and a transmitting unit (transmitting unit 210) that transmits allocation information indicating the allocation number to at least one of the radio base station and the other radio base station.

A user equipment (UE 200) described herein includes: a reception unit (reception unit 220) that receives a configuration request for header compression sessions from any one of a radio base station and another radio base station on which the user equipment performs dual connectivity; and a control unit (control unit 230) that receives the configuration request even if header compression sessions exceeding a maximum number of header compression sessions capable of being configured by the user equipment are configured.

Hereinafter, embodiments will be described with reference to the drawings. It should be noted that the same functions or configurations are denoted by the same or similar reference numerals, and a description thereof will be omitted as appropriate.

### (1) Overall Schematic Configuration of Radio Communication System

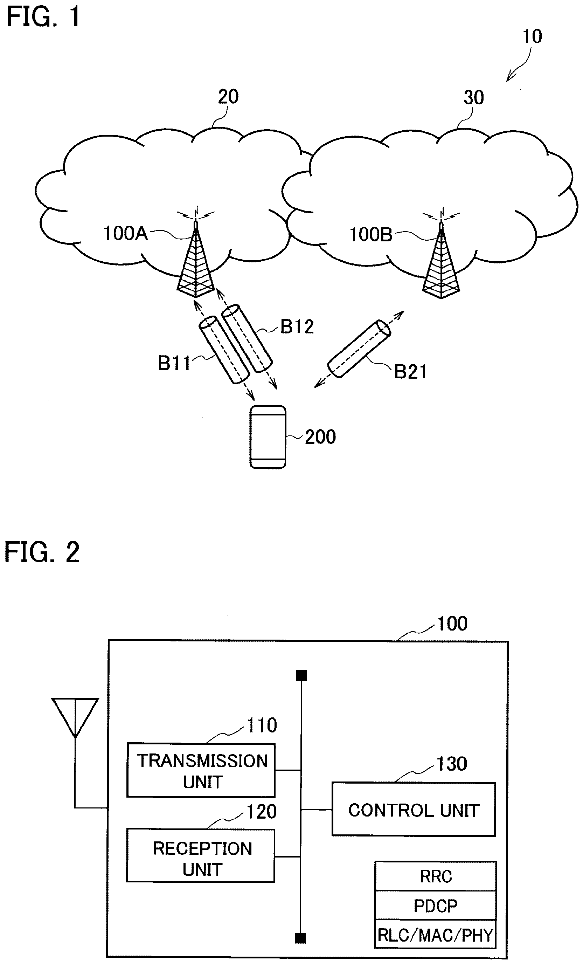

Fig. 1 is an overall schematic configuration diagram of a radio communication system 10 according to the present embodiment. The radio communication system 10 is a radio communication system in accordance with Long Term Evolution (LTE) and 5G New Radio (NR). It should be noted that LTE can be referred to as 4G, and NR can be referred to as 5G.

The radio communication system 10 includes an Evolved Universal Terrestrial Radio Access Network 20 (hereinafter, E-UTRAN 20) and a Next Generation-Radio Access Network 30 (hereinafter, NG RAN 30). In addition, the radio communication system 10 includes a user equipment 200 (hereinafter, UE 200).

The E-UTRAN 20 includes an eNB 100A that is a radio base station in accordance with LTE. The NG RAN 30 includes a gNB 100B that is a radio base station in accordance with 5G (NR). It is noted that the E-UTRAN 20 and the NG RAN 30 (also the eNB 100A or the gNB 100B) can be simply referred to as a network.

The eNB 100A, the gNB 100B, and the UE 200 can correspond to carrier aggregation (CA) using a plurality of component carriers (CC), Dual Connectivity (DC) that simultaneously transmits component carriers between a plurality of NG-RAN Nodes and a UE, and the like.

In the present embodiment, Multi-Radio Dual Connectivity (MR-DC) in which the eNB 100A constitutes a master node (MN) and the gNB 100B constitutes a secondary node (SN), specifically, E-UTRA-NR Dual Connectivity (EN-DC), is performed. In the present embodiment, the eNB 100A constitutes a radio base station, and the gNB 100B constitutes another radio base station.

Specifically, the UE 200 performs communication by using a bearer B11 and a bearer B12 configured via the eNB 100A and a bearer B21 configured via the gNB 100B. It should be noted that the bearers B11, B12, and B21 may be Data Radio Bearer (DRB) or may be Signalling Radio Bearer (SRB) .

In addition, in the present embodiment, the UE 200 supports an Internet Protocol (IP), a User Datagram Protocol (UDP), and a Real-time Transport Protocol (RTP), and transmits and receives a packet to which IP/UDP/RTP headers are added.

Furthermore, the eNB 100A, the gNB 100B, and the UE 200 each include a Packet Data Convergence Protocol layer (PDCP) and perform processing in accordance with RObust Header Compression (ROHC) that compresses and decompresses an IP/UDP/RTP header part.

### (2) Functional Block Configuration of Radio Communication System

Next, the functional block configuration of the radio communication system 10 will be described. Specifically, the functional block configurations of the eNB 100A and the UE 200 will be described.

It should be noted that, if the allocation number of ROHC sessions is determined by the UE 200, the eNB 100A (or the gNB 100B) may not implement a part of functions associated with the determination of the allocation number of ROHC sessions as described below.

Similarly, if the allocation number of ROHC sessions is determined by the eNB 100A (or the gNB 100B), the UE 200 may not implement a part of functions associated with the determination of the allocation number of ROHC sessions as described below.

That is, the function of determining the allocation number of ROHC sessions may be implemented in the eNB 100A (or the gNB 100B) or the UE 200. However, the implementation in both the eNB 100A (gNB 100B) and the UE 200 is not precluded.

### (2.1) eNB 100A

Fig. 2 is a functional block configuration diagram of the eNB 100A. As illustrated in Fig. 2, the eNB 100A includes a transmitting unit 110, a reception unit 120, and a control unit 130. It should be noted that the gNB 100B also has substantially the same configuration as the eNB 100A, except that a communication method is different.

The transmitting unit 110 transmits a downlink signal (DL signal) in accordance with LTE. In addition, the transmitting unit 110 transmits a message to the gNB 100B in accordance with a predetermined message format or via an inter-node interface.

Specifically, the transmitting unit 110 can perform communication with the gNB 100B via an X2/Xn interface and perform transmission/reception of inter-node messages with the gNB 100B. In particular, in the present embodiment, the transmitting unit 110 transmits, to the gNB 100B, allocation information indicating the number of header compression sessions that can be configured by the eNB 100A or the gNB 100B, specifically, the allocation number of ROHC sessions.

The reception unit 120 receives a UL signal in accordance with LTE. In particular, in the present embodiment, the reception unit 120 can receive the allocation number of ROHC sessions determined by the UE 200.

In addition, the reception unit 120 receives an inter-node message transmitted from the gNB 100B via an X2/Xn interface.

The transmitting unit 110 and the reception unit 120 each include a physical layer (PHY), a medium access control layer (MAC), a radio link control layer (RLC), a packet data convergence protocol layer (PDCP), and a radio resource control layer (RRC) as a protocol stack for the UE 200.

The transmitting unit 110 and the reception unit 120 perform compression/decompression processing of the IP/UDP/RTP headers in accordance with ROHC in the PDCP layer. The above-described ROHC session is configured between PDCP entities (between the eNB 100A and the UE 200) on which the compression/decompression processing is performed. The PDCP entity shares the context of the configured ROHC session (including a change pattern of the IP/UDP/RTP headers included in the IP flow).

The control unit 130 performs control on the UL signal transmitted by the transmitting unit 110 and the DL signal received by the reception unit 120.

In addition, in the present embodiment, the control unit 130 performs control on the allocation number of ROHC sessions. Specifically, the control unit 130 determines the allocation number of ROHC sessions that can be respectively configured by the eNB 100A or the gNB 100B.

More specifically, the eNB 100A determines the allocation number of ROHC sessions allocated to the eNB 100A or the gNB 100B based on the maximum number of ROHC sessions that can be configured by the UE 200.

As the maximum number of ROHC sessions, for example, maxNumberROHC-ContextSessions specified in 3GPP TS 38.306 can be used. maxNumberROHC-ContextSessions is specified as follows.

Defines the maximum number of header compression context sessions supported by the UE, excluding context sessions that leave all headers uncompressed.
maxNumberROHC-ContextSessions is notified from the UE 200 to the network as a type of capability of the UE 200.

In addition, as the allocation number of ROHC sessions, for example, maxCID specified in 3GPP TS 38.331 can be used. As described below, maxCID is specified.

Indicates the value of the MAX_CID parameter as specified in TS 38.323 [5].

The total value of MAX_CIDs across all bearers for the UE should be less than or equal to the value of maxNumberROHC-ContextSessions parameter as indicated by the UE. The network configures the same value for maxCID in both rohc and uplinkOnlyROHC.

That is, maxCID indicates a maximum value of identification numbers that identify the ROHC sessions (context sessions). A value of maxCID is configured so that the memory area (corresponding to the number of ROHC sessions) used for header compression/decompression processing in accordance with ROHC does not exceed the capabilities of the eNB 100A, the gNB 100B, and the UE 200.

As such, the control unit 130 can determine the allocation number of ROHC sessions that can be configured by each of the eNB 100A and the gNB 100B on which the UE 200 performs dual connectivity (MR-DC) based on maxNumberROHC-ContextSessions corresponding to the UE 200. It should be noted that an operation example of determining the allocation number of ROHC sessions will be described below.

The allocation number (maxCID) of ROHC sessions is notified from the network to the UE 200. However, in the present embodiment, as will be described below, the UE 200 can determine the allocation number of ROHC sessions allocated to the eNB 100A and the gNB 100B, respectively, and notify the network (the eNB 100A and the gNB 100B) of the determined allocation number.

In addition, the control unit 130 can determine the allocation number allocated to the eNB 100A and the allocation number allocated to the gNB 100B based on maxNumberROHC-ContextSessions. For example, if maxNumberROHC-ContextSessions is "4", the control unit 130 can determine "2" as the allocation number allocated to the eNB 100A and the allocation number allocated to the gNB 100B. It should be noted that the allocation number may be "2" or less.

In addition, if the allocation number is designated using maxCID, as described above, maxCID indicates a maximum value of identification numbers that identify the configured ROHC sessions, and the identification number starts from "0". Therefore, maxCID allocated to the eNB 100A and maxCID allocated to the gNB 100B are each "1".

Furthermore, the control unit 130 may determine the allocation number of ROHC sessions allocated to the gNB 100B based on maxNumberROHC-ContextSessions and a configured number of ROHC sessions that the eNB 100A configures with the UE 200.

For example, if maxNumberROHC-ContextSessions is "4" and one ROHC session are configured with the UE 200, the control unit 130 may determine the allocation number of ROHC sessions allocated to the gNB 100B as "3". It should be noted that the allocation number may be "3" or less.

In addition, if the UE 200 determines the allocation number of ROHC sessions, the control unit 130 can configure the ROHC session based on the allocation number transmitted from the UE 200.

### (2.2) UE 200

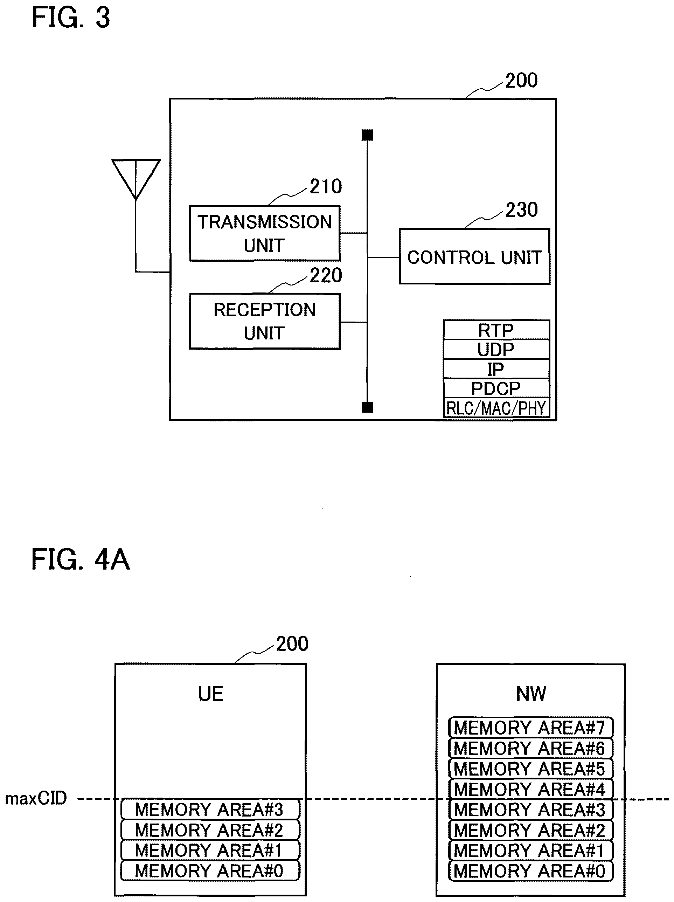

Fig. 3 is a functional block configuration diagram of the UE 200. As illustrated in Fig. 3, the UE 200 includes a transmitting unit 210, a reception unit 220, and a control unit 230.

The transmitting unit 210 transmits an uplink signal (UL signal) in accordance with LTE or NR. In particular, in the present embodiment, the transmitting unit 210 transmits allocation information indicating the allocation number of ROHC sessions to the network.

Specifically, the transmitting unit 210 can transmit allocation information indicating the allocation number (maxCID) of ROHC sessions to at least one of the eNB 100A and the gNB 100B. The allocation information may be notified to the network as the capability of the UE 200.

The reception unit 220 receives a downlink signal (DL signal) in accordance with LTE or NR. In particular, in the present embodiment, if the allocation number of ROHC sessions described above is determined by the eNB 100A (or the gNB 100B), the reception unit 220 receives the allocation number from the network.

The transmitting unit 210 and the reception unit 220 each include a physical layer (PHY), a medium access control layer (MAC), a radio link control layer (RLC), and a packet data convergence protocol layer (PDCP) as a protocol stack for the network. Although not illustrated in Fig. 3, the transmitting unit 210 and the reception unit 220 each also include a radio resource control layer (RRC) as the protocol stack.

In addition, as described above, the transmitting unit 210 and the reception unit 220 support an Internet Protocol (IP), a User Datagram Protocol (UDP), and a Real-time Transport Protocol (RTP) so as to process a short packet such as a voice packet.

The control unit 230 performs control on the UL signal transmitted by the transmitting unit 210 and the DL signal received by the reception unit 220.

In addition, in the present embodiment, the control unit 230 performs control on the allocation number of ROHC sessions. Specifically, the control unit 230 determines the allocation number of ROHC sessions that can be configured with each of the eNB 100A and the gNB 100B on which the UE 200 performs dual connectivity (MR-DC), based on the maximum number (maxNumberROHC-ContextSessions) of ROHC sessions that can be configured by the UE 200.

More specifically, as in the control unit 130 of the eNB 100A described above, the control unit 230 can determine the allocation number (maxCID) of ROHC sessions that can be configured with each of the eNB 100A and the gNB 100B.

In addition, in the present embodiment, the control unit 230 may determine the allocation number in response to a request from the network. That is, if there is no request from the network, the control unit 230 may not determine the allocation number.

### (3) Operation of Radio Communication System

Next, the operation of the radio communication system 10 will be described. Specifically, an example of determining the allocation number (maxCID) of ROHC sessions by the UE 200 and the network (eNB 100A and gNB 100B), an operation of determining the allocation number by the eNB 100A, and an operation of determining the allocation number by the UE 200 will be described.

### (3.1) Example of Determining Allocation Number (maxCID) of ROHC Sessions

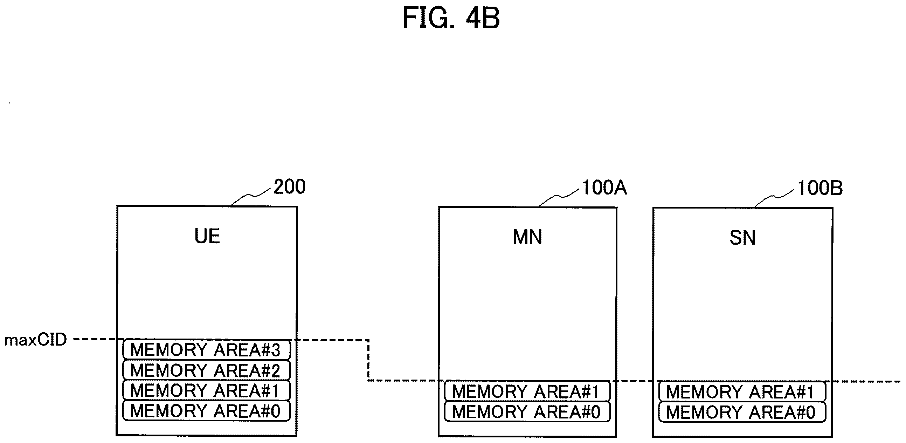

Fig. 4A is a diagram illustrating an example of determining the allocation number (maxCID) of ROHC sessions according to the related art. Fig. 4B is a diagram illustrating an example of determining the allocation number (maxCID) of ROHC sessions according to the present embodiment. Specifically, Fig. 4B illustrates an example of determining the allocation number (maxCID) of ROHC sessions when MR-DC (EN-DC) is performed with the eNB 100A (MN) and the gNB 100B (SN).

As illustrated in Figs. 4A and 4B, the UE 200 and the network (NW) use only the memory area below the identification number indicated by maxCID (for example, "memory area #3" in the UE 200), that is, use only four memory areas (ROHC sessions) or less.

As illustrated in Fig. 4B, if the UE 200 performs dual connectivity between the eNB 100A (MN) and the gNB 100B (SN), the number of ROHC sessions configured via the MN and the SN needs to be configured so as not to exceed maxNumberROHC-ContextSessions (here, "4") of the UE 200.

Therefore, in the present embodiment, ROHC sessions that can be configured in the MN and the SN, that is, available memory areas are allocated based on maxNumberROHC-ContextSessions, so as not to exceed maxNumberROHC-ContextSessions.

In the determination example illustrated in Fig. 4B, two memory areas are allocated to each of the MN and the SN. Thereby, the sum (2+2) of the allocation numbers (maxCID) of ROHC sessions does not exceed maxNumberROHC-ContextSessions (4).

In the determination example illustrated in Figs. 4A and 4B, it is assumed that one bearer (DRB) is configured. However, in practice, maxNumberROHC-ContextSessions is the maximum number of ROHC sessions per UE. Therefore, if a plurality of DRBs in which ROHC is available are configured, maxCID of each DRB needs to be configured so as not to exceed maxNumberROHC-ContextSessions.

That is, since the memory area used for ROHC is shared between bearers, 3GPP TS38.331 and the like specify that maxCID of each bearer needs to be configured so as not to exceed maxNumberROHC-ContextSessions in consideration of the value of maxCID of all bearers.

It should be noted that a typical type of packet to which ROHC is applied includes a voice packet. The voice packet is configured as follows.

- IP header (IPv4/IPv6): 20/40 Byte
- UDP header: 8 Byte
- RTP header: 12 Byte
- Payload: 32 Byte

The IP/UDP/RTP headers can be compressed to a minimum of 3 bytes by applying ROHC.

### (3.2) Operation of Determining Allocation number of ROHC sessions by eNB 100A

Next, an operation flow if the eNB 100A determines the allocation number of ROHC sessions will be described. The eNB 100A performs coordination with the gNB 100B regarding the determination of the allocation number of ROHC sessions.

### (3.2.1) Operation Example 1

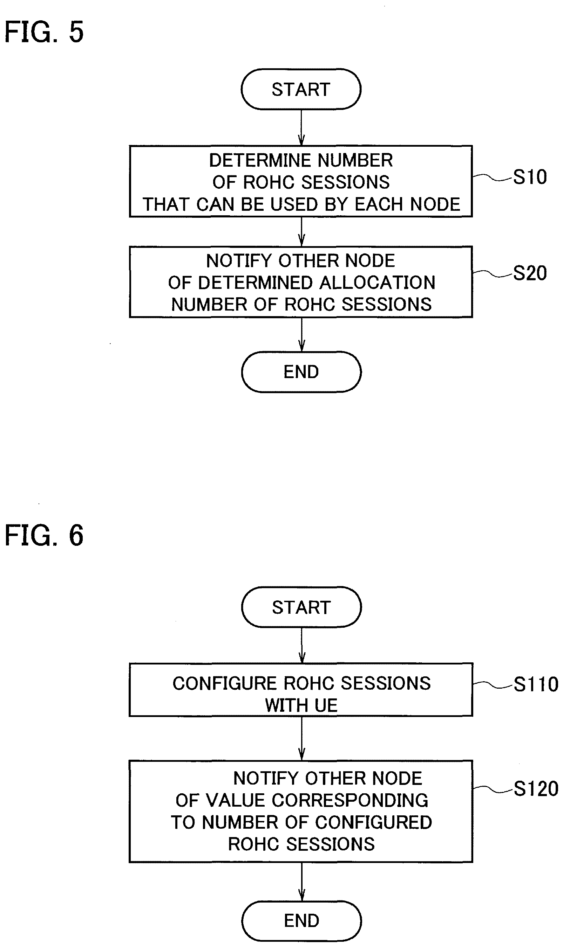

Fig. 5 illustrates an operation flow (No. 1) of determining the allocation number of ROHC sessions by the eNB 100A.

As illustrated in Fig. 5, the eNB 100A (MN) determines the number of ROHC sessions that can be used by each node (MN and SN) including its own node (S10).

Specifically, the eNB 100A determines the allocation number (maxCID) of ROHC sessions that can be configured by each of the MN and the SN, based on maxNumberROHC-ContextSessions of the UE 200. More specifically, the eNB 100A distributes the maximum number (for example, "4") of ROHC sessions to the MN and the SN (each "2") based on maxNumberROHC-ContextSessions.

The eNB 100A notifies the determined allocation number to the other node (gNB 100B) (S20). Specifically, the eNB 100A can explicitly or implicitly notify the determined allocation number to the gNB 100B by the following method.

- The determination subject node (eNB 100A) notifies the gNB 100B of the allocation number allocated to the determination subject node.
- The determination subject node (eNB 100A) notifies the gNB 100B of the allocation number of allocated to the other node (gNB 100B).

It should be noted that the allocation number per bearer may be notified, and if a plurality of bearers are configured, the sum of the allocation numbers (maxCID) configured to the determination subject node (eNB 100A) may be notified.

Furthermore, if the allocation number is not notified, the other node (gNB 100B) may regard the number of ROHC sessions, which can be configured by the other node, as a predefined value. For example, a minimum value (0), a default value (15), or a value obtained by dividing maxNumberROHC-ContextSessions by a predetermined value (the number of nodes, etc.) can be used.

### (3.2.2) Operation Example 2

Fig. 6 illustrates an operation flow (No. 2) of determining the allocation number of ROHC sessions by the eNB 100A.

As illustrated in Fig. 6, the eNB 100A (MN) configures ROHC sessions with the UE 200 (S110). Specifically, the eNB 100A configures one or more ROHC sessions with the UE 200 based on a configuration request for ROHC sessions from the UE 200 or the network.

The eNB 100A notifies the other node (gNB 100B) of a value corresponding to the number of ROHC sessions configured with the UE 200 (S120). Specifically, the eNB 100A determines the allocation number allocated to the gNB 100B based on maxNumberROHC-ContextSessions of the UE 200 and the configured number of ROHC sessions that the eNB 100A configures with the UE 200.

It should be noted that the allocation number of ROHC sessions allocated to the gNB 100B can use the same notification method as in Operation Example 1.

In addition, any node (for example, MN) may request a desired allocation number from the other node (SN). If the desired allocation number is allowable, the node (MN) that has received the request may respond that the desired allocation number is allowable, and if the desired allocation number is not allowable, the node (MN) that has received the request may notify the other node of the allowable allocation number.

Furthermore, if a reply to the request for the desired allocation number cannot be received from the MN, the other node (SN) may consider that the desired allocation number has been accepted by the MN.

It should be noted that, as described above, the eNB 100A and the gNB 100B can exchange the above-described information by either communication via an X2/Xn interface or transmission/reception of an inter-node message.

In addition, in Operation Examples 1 and 2 described above, the eNB 100A is the main body, but the gNB 100B may be the main body. In this case, the gNB 100B may be the MN (that is, NE-DC) or may be the SN.

Furthermore, the eNB 100A and the gNB 100B may previously exchange capability information indicating that it is possible to cope with the above-described allocation number determination processing.

### (3.3) Operation of Determining Allocation Number of ROHC sessions by UE 200

Next, an operation flow if the UE 200 determines the allocation number of ROHC sessions will be described. The UE 200 determines the allocation number of ROHC sessions allocated to the eNB 100A and the gNB 100B based on maxNumberROHC-ContextSessions of the UE 200 (Operation Example 1). In addition, the UE 200 accepts the allocation number even if the allocation number of ROHC sessions exceeding maxNumberROHC-ContextSessions of the UE 200 is notified from the network (Operation Example 2).

### (3.3.1) Operation Example 1

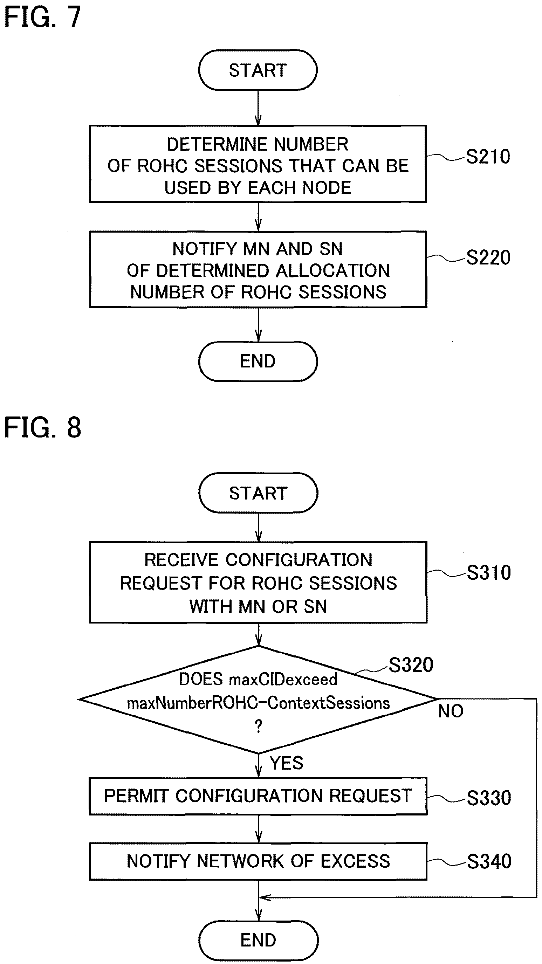

Fig. 7 illustrates an operation flow of determining the allocation number of ROHC sessions by the UE 200. As illustrated in Fig. 7, the UE 200 determines the number of ROHC sessions that can be used by each node, specifically, the eNB 100A (MN) and the gNB 100B (SN) (S210).

The method of determining the number of ROHC sessions is the same as Operation Example 1 of determining the allocation number of ROHC sessions by the eNB 100A as described above. Specifically, the UE 200 distributes the value of maxNumberROHC-ContextSessions of the UE 200 between the respective radio access technologies (RATs), in other words, to the respective cell groups.

It should be noted that the distribution method may be simple division into two parts or may be proportional to the number of DRBs supported by each RAT.

The UE 200 notifies the eNB 100A (MN) and the gNB 100B (SN) of the determined allocation number (S220).

Specifically, the UE 200 may notify the determined allocation number as the capability of the UE 200 in each RAT. It should be noted that the UE 200 may notify only one node of the allocation number, and the node that has received the allocation number may notify the value corresponding to the other node.

In addition, the UE 200 may determine the allocation number in response to a request from the network. That is, only if the determination of the allocation number is requested from the network, the UE 200 may perform the above-described determination operation.

### (3.3.2) Operation Example 2

Fig. 8 is a diagram illustrating an operation flow if the UE 200 receives a configuration request for ROHC sessions beyond capability.

As illustrated in Fig. 8, the UE 200 receives a configuration request for ROHC sessions with the eNB 100A (MN) or the gNB 100B (SN) (S310).

If the ROHC sessions are configured based on the configuration request, the UE 200 determines whether the capability of the UE 200 is exceeded (S320).

Specifically, the UE 200 determines whether maxCID exceeds maxNumberROHC-ContextSessions.

The UE 200 permits the configuration request even if maxCID exceeds maxNumberROHC-ContextSessions (S330).

By permitting the configuration request, the UE 200 notifies the network that the capability of the UE 200 has been exceeded (S340).

It should be noted that the UE 200 may notify that the capability of the UE 200 has been exceeded, or may notify the number of exceeded ROHC sessions. Furthermore, the UE 200 may notify information about a target bearer (for example, DRB-ID).

In addition, if the UE 200 receives a PDCP-PDU having a context ID corresponding to ROHC sessions that exceed the capability of the UE 200, the UE 200 may drop the PDU (packet).

Furthermore, the UE 200 may previously notify the network of capability information (for example, 1-bit information) indicating that the above-described operation of determining the allocation number and the operation if the configuration request for ROHC sessions beyond capability is received can be supported.

If maxCID exceeds maxNumberROHC-ContextSessions, the UE 200 performs reconnection as reconfiguration failure in the normal operation flow and is radio link failure (S-RLF) in the cell included in the secondary cell group. However, according to the present operation example, the UE 200 can avoid such a state.

### (4) Operation and Effect

According to the above-described embodiment, the following effects can be obtained. Specifically, the eNB 100A determines the allocation number of ROHC sessions allocated to the eNB 100A or the gNB 100B based on the maximum number of ROHC sessions that can be configured by the UE 200, and transmits allocation information indicating the allocation number to the gNB 100B.

Similarly, the UE 200 determines the allocation number of ROHC sessions allocated to the eNB 100A or the gNB 100B based on the maximum number of ROHC sessions that can be configured by the UE 200, and transmits allocation information indicating the allocation number to at least one of the eNB 100A and the gNB 100B.

Therefore, even if the UE 200 performs dual connectivity, specifically, MR-DC, the eNB 100A and the gNB 100B can configure the ROHC sessions based on the determined allocation number so as not to exceed the maximum number (maxNumberROHC-ContextSessions) of ROHC sessions that can be configured by the UE 200.

Thereby, even if MR-DC is performed, the eNB 100A, the gNB 100B, and the UE 200 can configure the ROHC sessions more reliably.

In the present embodiment, the eNB 100A can determine the allocation number allocated to the eNB 100A and the allocation number allocated to the gNB 100B based on maxNumberROHC-ContextSessions of the UE 200. Therefore, the number of ROHC sessions allocated to each node can be efficiently determined while avoiding exceeding the capability of the UE 200.

In the present embodiment, the eNB 100A can determine the allocation number of ROHC sessions allocated to the gNB 100B based on maxNumberROHC-ContextSessions of the UE 200 and the configured number of ROHC sessions that the eNB 100A configures with the UE 200. Therefore, even if a certain number of ROHC sessions are already configured, the number of ROHC sessions allocated to each node can be efficiently determined while avoiding exceeding the capability of the UE 200.

In the present embodiment, the UE 200 can determine the allocation number of ROHC sessions in response to the request from the network. Therefore, even if a plurality of types of UEs having different support releases are mixed, the network can instruct the operation to the UE 200 that supports the operation of determining the allocation number of ROHC sessions, and can also secure backward compatibility for older releases of UEs that do not support the operation.

### (5) Other Embodiments

Although the contents of the present invention have been described along with the embodiment, the present invention is not limited to these descriptions, and it will be obvious to those skilled in the art that various modifications and improvements can be made thereto.

For example, in the above-described embodiment, the eNB 100A (MN) determines the allocation number of ROHC sessions, but instead of the MN, the gNB 100B (SN) may determine the allocation number of ROHC sessions.

In the above-described embodiment, maxCID is used as the allocation number of ROHC sessions, but maxCID may not be necessarily used. For example, as described above, maxCID indicates the maximum value of the identification numbers that identify the configured ROHC sessions, but a new parameter that directly indicates the allocation number of ROHC sessions may be used.

In the above-described embodiment, voice packets are used as the application to which ROHC is applied. However, short packets whose ratio of the header to the payload increases, for example, packets for Industrial IoT (IIoT), may be targeted.

Moreover, the block configuration diagrams used for explaining the above-described embodiment (Figs. 2 and 3) illustrate blocks of functional unit. Those functional blocks (structural components) can be realized by a desired combination of at least one of hardware and software. Method for realizing each functional block is not particularly limited. That is, each functional block may be realized by one device combined physically or logically. Alternatively, two or more devices separated physically or logically may be directly or indirectly connected (for example, wired, or wireless) to each other, and each functional block may be realized by these plural devices. The functional blocks may be realized by combining software with the one device or the plural devices mentioned above.

Functions include judging, deciding, determining, calculating, computing, processing, deriving, investigating, searching, confirming, receiving, transmitting, outputting, accessing, resolving, selecting, choosing, establishing, comparing, assuming, expecting, considering, broadcasting, notifying, communicating, forwarding, configuring, reconfiguring, allocating (mapping), assigning, and the like, but not limited thereto. For example, a functional block (structural component) that causes transmitting may be called a transmitting unit or a transmitter. For any of the above, as explained above, the realization method is not particularly limited to any one method.

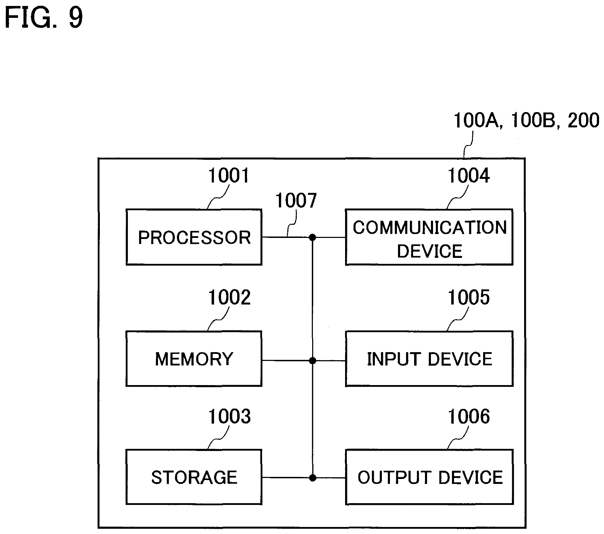

Furthermore, the eNB 100A, the gNB 100B, and the UE 200 (the device) "explained above can function as a computer that performs the processing of the radio communication method of the present disclosure. Fig. 9 is a diagram illustrating an example of a hardware configuration of the device. As illustrated in Fig. 9, the device can be configured as a computer device including a processor 1001, a memory 1002, a storage 1003, a communication device 1004, an input device 1005, an output device 1006, a bus 1007, and the like.

Furthermore, in the following explanation, the term "device" can be replaced with a circuit, device, unit, and the like. Hardware configuration of the device can be constituted by including one or plurality of the devices illustrated in the figure, or can be constituted by without including a part of the devices.

The functional blocks of the device (see Figs. 2 and 3) can be realized by any of hardware elements of the computer device or a desired combination of the hardware elements.

Moreover, the processor 1001 performs operation by loading a predetermined software (program) on hardware such as the processor 1001 and the memory 1002, and realizes various functions of the device by controlling communication via the communication device 1004, and controlling reading and / or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

Moreover, the processor 1001 reads a program (program code), a software module, data, and the like from the storage 1003 and / or the communication device 1004 into the memory 1002, and executes various processes according to the data. As the program, a program that is capable of executing on the computer at least a part of the operation explained in the above embodiments is used. Alternatively, various processes explained above can be executed by one processor 1001 or can be executed simultaneously or sequentially by two or more processors 1001. The processor 1001 can be implemented by using one or more chips. Alternatively, the program can be transmitted from a network via a telecommunication line.

The memory 1002 is a computer readable recording medium and is configured, for example, with at least one of Read Only Memory (ROM), Erasable Programmable ROM (EPROM), Electrically Erasable Programmable ROM (EEPROM), Random Access Memory (RAM), and the like. The memory 1002 can be called register, cache, main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include at least one of an optical disk such as Compact Disc ROM (CD-ROM), a hard disk drive, a flexible disk, a magneto-optical disk (for example, a compact disk, a digital versatile disk, Blu-ray (Registered Trademark) disk), a smart card, a flash memory (for example, a card, a stick, a key drive), a floppy (Registered Trademark) disk, a magnetic strip, and the like. The storage 1003 can be called an auxiliary storage device. The recording medium can be, for example, a database including the memory 1002 and / or the storage 1003, a server, or other appropriate medium.

The communication device 1004 is hardware (transmission / reception device) capable of performing communication between computers via a wired and / or wireless network. The communication device 1004 is also called, for example, a network device, a network controller, a network card, a communication module, and the like.

The communication device 1004 includes a high-frequency switch, a duplexer, a filter, a frequency synthesizer, and the like in order to realize, for example, at least one of Frequency Division Duplex (FDD) and Time Division Duplex (TDD) .

The input device 1005 is an input device (for example, a keyboard, a mouse, a microphone, a switch, a button, a sensor, and the like) that accepts input from the outside. The output device 1006 is an output device (for example, a display, a speaker, an LED lamp, and the like) that outputs data to the outside. Note that, the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be constituted by a single bus or can be constituted by separate buses between the devices.

Further, the device is configured to include hardware such as a microprocessor, a digital signal processor (Digital Signal Processor: DSP), Application Specific Integrated Circuit (ASIC), Programmable Logic Device (PLD), and Field Programmable Gate Array (FPGA). Some or all of these functional blocks may be realized by the hardware. For example, the processor 1001 may be implemented by using at least one of these hardware.

Notification of information is not limited to that explained in the above aspect/embodiment, and may be performed by using a different method. For example, the notification of information may be performed by physical layer signaling (for example, Downlink Control Information (DCI), Uplink Control Information (UCI), higher layer signaling (for example, RRC signaling, Medium Access Control (MAC) signaling, broadcast information (Master Information Block (MIB), System Information Block (SIB)), other signals, or a combination of these. The RRC signaling may be called RRC message, for example, or can be RRC Connection Setup message, RRC Connection Reconfiguration message, or the like.

Each of the above aspects/embodiments can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (Registered Trademark), GSM (Registered Trademark), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), a system using any other appropriate system, and a next-generation system that is expanded based on these. Further, a plurality of systems may be combined (for example, a combination of at least one of the LTE and the LTE-A with the 5G).

As long as there is no inconsistency, the order of processing procedures, sequences, flowcharts, and the like of each of the above aspects/embodiments in the present disclosure may be exchanged. For example, the various steps and the sequence of the steps of the methods explained above are exemplary and are not limited to the specific order mentioned above.

The specific operation that is performed by the base station in the present disclosure may be performed by its upper node in some cases. In a network constituted by one or more network nodes having a base station, the various operations performed for communication with the terminal may be apparently performed by at least one of the base station and another network nodes other than the base station (for example, MME, S-GW, and the like may be considered, but not limited thereto). In the above, an example in which there is one network node other than the base station is explained; however, a combination of a plurality of other network nodes (for example, MME and S-GW) may be used.

Information and signals (information and the like) can be output from an upper layer (or lower layer) to a lower layer (or upper layer). It may be input and output via a plurality of network nodes.

The input / output information can be stored in a specific location (for example, a memory) or can be managed in a management table. The information to be input / output can be overwritten, updated, or added. The information can be deleted after outputting. The inputted information can be transmitted to another device.

The determination may be made by a value (0 or 1) represented by one bit or by Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, it may be performed implicitly (for example, without notifying the predetermined information).

Instead of being referred to as software, firmware, middleware, microcode, hardware description language, or some other name, software should be interpreted broadly to mean instruction, instruction set, code, code segment, program code, program, subprogram, software module, application, software application, software package, routine, subroutine, object, executable file, execution thread, procedure, function, and the like.

Further, software, instruction, information, and the like may be transmitted and received via a transmission medium. For example, when a software is transmitted from a website, a server, or some other remote source by using at least one of a wired technology (coaxial cable, optical fiber cable, twisted pair, Digital Subscriber Line (DSL), or the like) and a wireless technology (infrared light, microwave, or the like), then at least one of these wired and wireless technologies is included within the definition of the transmission medium.

Information, signals, or the like mentioned above may be represented by using any of a variety of different technologies. For example, data, instruction, command, information, signal, bit, symbol, chip, or the like that may be mentioned throughout the above description may be represented by voltage, current, electromagnetic wave, magnetic field or magnetic particle, optical field or photons, or a desired combination thereof.

It should be noted that the terms described in this disclosure and terms necessary for understanding the present disclosure may be replaced by terms having the same or similar meanings. For example, at least one of a channel and a symbol may be a signal (signaling). Also, a signal may be a message. Further, a component carrier (Component Carrier: CC) may be referred to as a carrier frequency, a cell, a frequency carrier, or the like.

The terms "system" and "network" used in the present disclosure can be used interchangeably.

Furthermore, the information, the parameter, and the like explained in the present disclosure can be represented by an absolute value, can be expressed as a relative value from a predetermined value, or can be represented by corresponding other information. For example, the radio resource can be instructed by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and / or a base station subsystem that performs communication service in this coverage.

In the present disclosure, the terms "mobile station (Mobile Station: MS)", "user terminal", "user equipment (User Equipment: UE)", "terminal" and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). At least one of a base station and a mobile station can be a device that does not necessarily move during the communication operation. For example, at least one of a base station and a mobile station may be an Internet of Things (IoT) device such as a sensor.

Also, a base station in the present disclosure may be read as a mobile station (user terminal, hereinafter the same). For example, each of the aspects/embodiments of the present disclosure may be applied to a configuration that allows a communication between a base station and a mobile station to be replaced with a communication between a plurality of mobile stations (for example, may be referred to as Device-to-Device (D2D), Vehicle-to-Everything (V2X), or the like). In this case, the mobile station may have the function of the base station. Words such as "uplink" and "downlink" may also be replaced with wording corresponding to inter-terminal communication (for example, "side"). For example, terms an uplink channel, a downlink channel, or the like may be read as a side channel.

Likewise, a mobile station in the present disclosure may be read as a base station. In this case, the base station may have the function of the mobile station.

The terms "connected", "coupled", or any variations thereof, mean any direct or indirect connection or coupling between two or more elements. Also, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, printed electrical connections, and as some nonlimiting and non-exhaustive examples, by using electromagnetic energy having wavelengths in the radio frequency domain, the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

Any reference to an element using a designation such as "first", "second", and the like used in the present disclosure generally does not limit the amount or order of those elements. Such designations can be used in the present disclosure as a convenient way to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

Throughout this disclosure, for example, during translation, if articles such as "a", "an", and "the" in English are added, in this disclosure, these articles shall include plurality of nouns following these articles.

In the present disclosure, the term "A and B are different" may mean "A and B are different from each other". It should be noted that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in this disclosure. The scope of the present disclosure is as defined by the claims.

### Reference Signs List

- 10: radio communication system
- 20: E-UTRAN
- 30: NG RAN
- 100A: eNB
- 100B: gNB
- 110: transmitting unit
- 120: reception unit
- 130: control unit
- 200: UE
- 210: transmitting unit
- 220: reception unit
- 230: control unit
- B11, B12, B21: bearer
- 1001: processor
- 1002: memory
- 1003: storage
- 1004: communication device
- 1005: input device
- 1006: output device
- 1007: bus

## Claims

1. A radio base station (100) comprising:
a control unit (130) configured to determine a first allocation number of header compression sessions capable of being configured by the radio base station and a second allocation number of header compression sessions capable of being configured by another radio base station (100), on which a terminal (200) performs dual connectivity, so that a total of the first allocation number and second allocation number is less than a maximum number of header compression sessions capable of being configured by the terminal; and
a transmitting unit (110) configured to transmit allocation information indicating the second allocation number to the other radio base station.

2. The radio base station (100) according to claim 1, wherein the dual connectivity is a multi-radio dual connectivity.

3. The radio base station (100) according to claim 2, wherein the radio base station is an eNB configured to constitute a master node in a E-UTRA-NR dual connectivity, and the other radio base station (100) is a gNB constituting a secondary node.

4. The radio base station (100) according to any of claims 1 to 3, wherein the transmitting unit (110) is configured to transmit to the other radio base station via an inter-node interface.

5. A radio communication system (10) including the radio base station (100) according to any of claims 1 to 4 and the other radio base station (100).

6. A method for a radio base station (100), the method comprising:
determining a first allocation number of header compression sessions capable of being configured by the radio base station and a second allocation number of header compression sessions capable of being configured by another radio base station (100), on which a terminal (200) performs dual connectivity, so that a total of the first allocation number and second allocation number is less than a maximum number of header compression sessions capable of being configured by the terminal; and
transmitting allocation information indicating the second allocation number to the other radio base station.

## Patentansprüche

1. Eine Funkbasisstation (100), umfassend:
eine Steuereinheit (130), die so konfiguriert ist, dass sie eine erste Zuordnungszahl von Header-Komprimierungssitzungen, die von der Funkbasisstation konfiguriert werden können, und eine zweite Zuordnungszahl von Header-Komprimierungssitzungen, die von einer anderen Funkbasisstation (100) konfiguriert werden können, bestimmt, auf der ein Endgerät (200) eine duale Konnektivität ausführt, so dass die Summe aus der ersten Zuordnungszahl und zweiten Zuordnungszahl kleiner ist als eine maximale Anzahl von Header-Komprimierungssitzungen, die von dem Endgerät konfiguriert werden können; und
eine Sendeeinheit (110), die so konfiguriert ist, dass sie Zuordnungsinformationen, die die zweite Zuordnungszahl angeben, an die andere Funkbasisstation sendet.

2. Die Funkbasisstation (100) gemäß Anspruch 1, wobei die Dual-Konnektivität eine Multi-Radio-Dual-Konnektivität ist.

3. Funkbasisstation (100) nach Anspruch 2, wobei die Funkbasisstation eine eNB ist, die so konfiguriert ist, dass sie einen Hauptknoten in einer E-UTRA-NR-Doppelkonnektivität bildet, und die andere Funkbasisstation (100) eine gNB ist, die einen Sekundärknoten bildet.

4. Die Funkbasisstation (100) gemäß einem der Ansprüche 1 bis 3, wobei die Sendeeinheit (110) so konfiguriert ist, dass sie über eine Zwischen-Knoten-Schnittstelle an die andere Funkbasisstation sendet.

5. Ein Funkkommunikationssystem (10), das die Funkbasisstation (100) gemäß einem der Ansprüche 1 bis 4 und die andere Funkbasisstation (100) umfasst.

6. Ein Verfahren für eine Funkbasisstation (100), wobei das Verfahren umfasst:
Bestimmen einer ersten Zuordnungszahl von Header-Komprimierungssitzungen, die durch die Funkbasisstation konfiguriert werden können, und einer zweiten Zuordnungszahl von Header-Komprimierungssitzungen, die durch eine andere Funkbasisstation (100) konfiguriert werden können, auf der ein Endgerät (200) eine duale Konnektivität ausführt, so dass eine Summe der ersten Zuordnungszahl und zweiten Zuordnungszahl kleiner als eine maximale Anzahl von Header-Komprimierungssitzungen ist, die durch das Endgerät konfiguriert werden können; und
Übertragen von Zuordnungsinformation, die die zweite Zuordnungszahl angibt, an die andere Funkbasisstation.

## Revendications

1. Station de base (100) radio comprenant :
une unité de commande (130) configurée pour déterminer un premier nombre d'attributions de sessions de compression d'en-tête aptes à être configurées par la station de base radio et un second nombre d'attributions de sessions de compression d'en-tête aptes à être configurées par une autre station de base (100) radio, sur laquelle un terminal (200) met en oeuvre une double connectivité, de sorte qu'un total du premier nombre d'attributions et du second nombre d'attributions est inférieur à un nombre maximal de sessions de compression d'en-tête aptes à être configurées par le terminal ; et
une unité de transmission (110) configurée pour transmettre des informations d'attribution indiquant le second nombre d'attributions à l'autre station de base radio.

2. Station de base (100) radio selon la revendication 1, dans laquelle la double connectivité est une double connectivité multi-radio.

3. Station de base (100) radio selon la revendication 2, dans laquelle la station de base radio est une eNB configurée pour constituer un noeud maître dans une double connectivité E-UTRA-NR, et l'autre station de base (100) radio est une gNB constituant un noeud secondaire.

4. Station de base (100) radio selon l'une quelconque des revendications 1 à 3, dans laquelle l'unité de transmission (110) est configurée pour transmettre vers l'autre station de base radio par l'intermédiaire d'une interface inter-noeud.

5. Système (10) de communication radio incluant la station de base (100) radio selon l'une quelconque des revendications 1 à 4 et l'autre station de base (100) radio.

6. Procédé pour une station de base (100) radio, le procédé comprenant :
la détermination d'un premier nombre d'attributions de sessions de compression d'en-tête aptes à être configurées par la station de base radio et d'un second nombre d'attributions de sessions de compression d'en-tête aptes à être configurées par une autre station de base (100) radio, sur laquelle un terminal (200) met en oeuvre une double connectivité, de sorte qu'un total du premier nombre d'attributions et du second nombre d'attributions est inférieur à un nombre maximal de sessions de compression d'en-tête aptes à être configurées par le terminal ; et
la transmission d'informations d'attribution indiquant le second nombre d'attributions à l'autre station de base radio.
